Europäisches Patentamt

European Patent Office

Office européen des brevets

(11) Veröffentlichungsnummer: **0 218 157**
**A2**

(12) **EUROPÄISCHE PATENTANMELDUNG**

(21) Anmeldenummer: 86113283.5

(22) Anmeldetag: 26.09.86

(51) Int. Cl.⁴: **G01J 5/60**

(30) Priorität: 07.10.85 DE 3535763

(43) Veröffentlichungstag der Anmeldung:
15.04.87 Patentblatt 87/16

(84) Benannte Vertragsstaaten:
**AT BE CH DE FR GB IT LI LU NL SE**

(71) Anmelder: **INTERATOM Gesellschaft mit
beschränkter Haftung
Friedrich-Ebert-Strasse
D-5060 Bergisch Gladbach 1(DE)**

(72) Erfinder: **Lange, Ludwig, Dipl.-Phys.
Adalbert-Stifter-Strasse 41
D-5060 Bergisch Gladbach(DE)**

(74) Vertreter: **Mehl, Ernst, Dipl.-Ing. et al
Postfach 22 01 76
D-8000 München 22(DE)**

(54) **Präzisionspyrometer.**

(57) Die vorliegende Erfindung betrifft ein Pyrometer, welches insbesondere auch hochtransiente Temperaturvorgänge sehr genau erfassen kann. Das Gerät arbeitet nach dem Prinzip der Verhältnispyrometer, verwendet jedoch keine optischen Filter, sondern fotoelektrische Elemente (8a, 9a) unterschiedlicher spektraler Empfindlichkeiten, vorzugsweise Foto-PIN-Dioden oder Foto-Avalanche-Dioden mit kurzen Ansprechzeiten. Durch nicht der Strahlung ausgesetzte gleichartige Referenzelemente (8b, 9b), die sich in Wärmekontakt mit den Meßelementen (8a, 9a) befinden, werden die thermischen Dunkelströme kompensiert. Bei Verwendung von infrarotdurchlässigen Optiken (2, 3, 4, 5, 6, 7) und Fotodioden mit Empfindlichkeiten bei 0,8 bzw. 1,6 μm Wellenlänge, kann das Pyrometer schnelle und genaue Messungen bis etwa 2500 °C durchführen.

FIG 1

## Präzisionspyrometer

Die vorliegende Erfindung betrifft ein fotoelektrisches Pyrometer gemäß dem Oberbegriff des Anspruchs 1.

Aus einem Artikel der Zeitschrift "Fachberichte" der Siemens-AG, Heft 11, 1975, Seiten 896 -902 mit dem Titel "Berührungslose Temperaturmessung mit Infrarot-Strahlungspyrometern im Hochtemperaturbereich" ist die Funktionsweise von Pyrometern und auch die prinzipielle Wirkungsweise von Verhältnispyrometern bekannt. Solche Verhältnispyrometer bilden das Verhältnis der Strahlungsdichten bei zwei Wellenlängen, wobei der Quotient nach dem Verschiebungsgesetz von Wien ein Maß für die Temperatur ist. Bei solchen Pyrometern werden unter anderem Fotoelemente zur Umwandlung der Strahlungsenergie in ein elektrisches Signal verwendet. Bei bisher bekannten Verhältnispyrometern werden zwei schmale Wellenlängenbereiche durch Filter ausgefiltert und auf zwei geichartige Fotoelemente gelenkt. Die Ausfilterung von schmalen Wellenlängenbereichen bringt allerdings einen Intensitätsverlust der einfallenden Strahlung mit sich, was sich auf die Schnelligkeit und Genauigkeit der Messung auswirkt. Zwar wurden als Ausgleich dazu gegebenenfalls großflächige fotoelektrische Elemente verwendet, jedoch haben diese eine hohe Eigenkapazität, wodurch die Ansprechzeiten verhältnismäßig lang werden.

Aufgabe der vorliegenden Erfindung ist ein fotoelektrisches Pyrometer, welches präzise Temperaturmessungen auch bei hochtransienten Vorgängen ermöglicht.

Zur Lösung dieser Aufgabe wird gemäß dem Hauptanspruch vorgeschlagen, daß die fotoelektrischen Elemente, die als Strahlungsempfänger in dem Pyrometer dienen, unterschiedliche spektrale Empfindlichkeiten aufweisen sollen. Durch diese Ausführung werden keine Filter im Strahlengang benötigt und es können sehr viel breitere Spektralbereiche für die Messung verwendet werden, was einen Gewinn an Genauigkeit bzw. Schnelligkeit der Messung ermöglicht. Außerdem vereinfacht sich der Aufbau der Optik. Die Auswahl der spektralen Empfindlichkeitsbereiche der Fotoelemente hängt von dem jeweils gewünschten Meßbereich ab, wobei für Temperaturmessungen bis etwa 3000 °C z. B. Maxima der Empfindlichkeiten bei 0,8 bzw. 1,6 μm Wellenlänge geeignet sind. Für die Messung niedrigerer Temperaturen sollten sich diese Maxima zu größeren Wellenlängen verschieben, während für die Messung höherer Temperaturen fotoelektrische Elemente mit Empfindlichkeitsmaxima bei kleineren Wellenlängen geeignet sind. Gewünschte Paarungen von Fotoelementen lassen sich für die jeweiligen Temperaturbereiche problemlos aus den Datenblättern verschiedener Bautypen zusammenstellen.

In weiterer Ausgestaltung der Erfindung wird im Anspruch 2 vorgeschlagen, daß die fotoelektrischen Elemente eine sehr geringe Eigenkapazität aufweisen sollen, z. B. kleiner als 5 pF, wodurch sich kurze Ansprechzeiten von z. B. kleiner 1 ns verwirklichen lassen. Diese Ausgestaltung führt für sich allein und insbesondere in Verbindung mit den Merkmalen des Hauptanspruchs zu einer höheren Zeitauflösung bei der Temperaturmessung, was für die Beobachtung transienter Vorgänge von Bedeutung ist.

Als besonders geeignet erscheinen, wie in Anspruch 3 angegegen, Foto-PIN-Dioden oder Foto-Avalanche-Dioden für den Einsatz in Pyrometern - (PIN = positive intrisic negative). Solche Dioden haben sehr geringe Eigenkapazitäten und sind in unterschiedlichen spektralen Empfindlichkeiten verfügbar, so beispielsweise als Silicium-oder InGaAs-Fotodioden (Hersteller z. B. RCA, Bezugsquelle: Alfred Neye Enatechnick GmbH, Quickborn).

In weiterer Ausgestaltung der Erfindung wird im Anspruch 4 eine besondere Art der Temperaturkompensation vorgeschlagen. Fotoelektrische Elemente, insbesondere Fotodioden, weisen auch ohne einfallende Strahlung einen sogenannten Dunkelsperrstrom auf, welcher von der Temperatur abhängig ist. Um Temperatureinflüsse bei der Messung zu vermeiden, muß dieser Dunkelsperrstrom kompensiert werden. Dies wird erfindungsgemäß dadurch erreicht, daß jedem fotoelektrischen Element zur Erfassung der Strahlung ein gleichartiges Referenzelement zugeordnet ist, welches gegenüber jeder einfallenden Strahlung abgeschirmt ist und daher nur den Dunkelstrom durchläßt. Dieser kann dann von dem im Meßelement fließenden Strom abgezogen werden.

Um sicherzustellen, daß Meßelemente und Referenzelemente sich jeweils auf der gleichen Temperatur befinden, wird in Anspruch 5 vorgeschlagen, daß jeweils Meßelement und Referenzelement in engem Wärmekontakt stehen sollen. Dazu können sie vorzugsweise in einem gemeinsamen wärmeleitenden Gehäuse, z. B. aus Kupfer angeordnet sein, wobei das Gehäuse das Referenzelement gleichzeitig vor einfallender Strahlung - schützen kann.

In weiterer Ausgestaltung der Erfindung wird in Anspruch 6 vorgeschlagen, daß die Fokussieroptik so angeordnet ist, daß die von dem Objekt ausgehende Strahlung in das offene Ende eines Lichtleiters fokussiert wird. Eine solche Anordnung ist an sich bekannt und ermöglicht einen relativ einfachen Aufbau des Meßgerätes. Dabei kommen ein Glasstab mit geeignetem Brechungsindex oder ein faseroptischer Lichtleiter in Betracht.

Da das von dem thermischen Strahler ausgehende Licht in dem Meßgerät in zwei Anteile aufgespalten werden soll, ist es zur Vermeidung von Justierproblemen nötig, daß sich das Licht in dem Lichtleiter durch häufige Reflexion etwa statistisch über dessen Querschnitt verteilt. Daher muß der Lichtleiter gemäß Anspruch 7 eine ausreichende Länge im Verhältnis zu seinem Durchmesser aufweisen, um dies zu ermöglichen. Nach dieser Länge ist eine Aufspaltung in zwei Zweige möglich, deren Lichtanteile nicht mehr von der Positionierung des zu messenden Objektes abhängen. Vor den Enden der zwei Zweige können die fotoelektrischen Elemente zur Erfassung der Strahlung angeordnet werden. Die Aufspaltung in zwei Strahlengänge braucht nicht im wörtlichen Sinne durch Aufspaltung des Lichtleiters zu erfolgen, sondern kann natürlich durch andere optische Mittel zur Strahlungsteilung bewirkt werden.

In spezieller Ausgestaltung der Erfindung wird in Anspruch 8 vorgeschlagen, daß die Fokussieroptik und der Lichtleiter aus einem im gewünschten Wellenlängenbereich gut durchlässigen Material bestehen sollen. Dabei hängt es von den zu messenden Temperaturbereichen ab, für welche Wellenlängenbereiche das Material durchlässig sein muß. Außerdem ist es natürlich sinnvoll, daß das Material in den Spektralbereichen gut durchlässig ist, in denen die fotoelektrischen Elemente ihre empfindlichen Bereiche haben, um die einfallende Strahlung möglichst weitgehend auszunutzen. Für Temperaturen bis etwa 2500 °C sollte beispielsweise mit infrarotdurchlässigem Material gearbeitet werden, insbesondere Bleisilikatglas, Ca-Al-Silikatglas oder Fluor-Phosphatglas.

Ebenfalls entsprechend dem gewünschten Temperaturmeßbereich müssen gemäß Anspruch 9 die spektralen Empfindlichkeiten der fotoelektrischen Elemente gewählt werden. Das Ziel bei der Auswahl der fotoelektrischen Elemente muß sein, daß sich das Verhältnis der Ströme in den beiden Elementen im Temperaturmeßbereich bei Temperaturänderungen möglichst gut meßbar ändert. Die von Verhältnispyrometern bekannten Grundsätze werden entsprechend angewandt. Gut meßbar sind z. B. Änderungen des Verhältnisses der Ströme um einen Faktor 10 bis 100 über den gewünschten Meßbereich.

Gemäß Anspruch 10 sind die fotoelektrischen Elemente mit einer Auswertelektronik verbunden, die jeweils die Differenz aus den Strömen in den Meßelementen und den zugehörigen Referenzelementen bildet und diese beiden Differenzen in an sich bei Verhältnispyrometern bekannter Weise weiterverarbeitet und in eine Temperatur umrechnet. Die Differenzbildung hat den Vorteil, daß in der ersten Stufe der Auswerteelektronik mit Differenzverstärkern gearbeitet werden kann, welche eine sehr präzise Signalverarbeitung ermöglichen. Da bei der Messung von hochtransienten Temperaturvorgängen eine optische Anzeige der Temperatur nicht immer sinnvoll ist, können die ermittelten Temperaturwerte auch anderweitig aufgezeichnet oder übermittelt werden.

Um die vollen Möglichkeiten von fotoelektrischen Elementen mit kurzen Ansprechzeiten ausnutzen zu können, sollte die Auswerteelektronik gemäß Anspruch 11 aus Hochgeschwindigkeitsschaltkreisen (High-speed-Schaltkreise) aufgebaut sein, welche kurze Signalanstiegszeiten aufweisen.

Geeignet sind Schaltkreise mit einem Signalanstieg > 10 V/$\mu$s (slew-rate). Je nach Aufgabenstellung können natürlich auch schnellere oder langsamere Schaltkreise geeignet sein.

Ein Ausführungsbeispiel der Erfindung wird anhand der Zeichnung näher erläutert. Es zeigen

Figur 1 einen schematischen Längsschnitt durch ein erfindungsgemäßes Pyrometer und

Figur 2 ein Blockdiagramm der elektronischen Signalverarbeitung des Pyrometers.

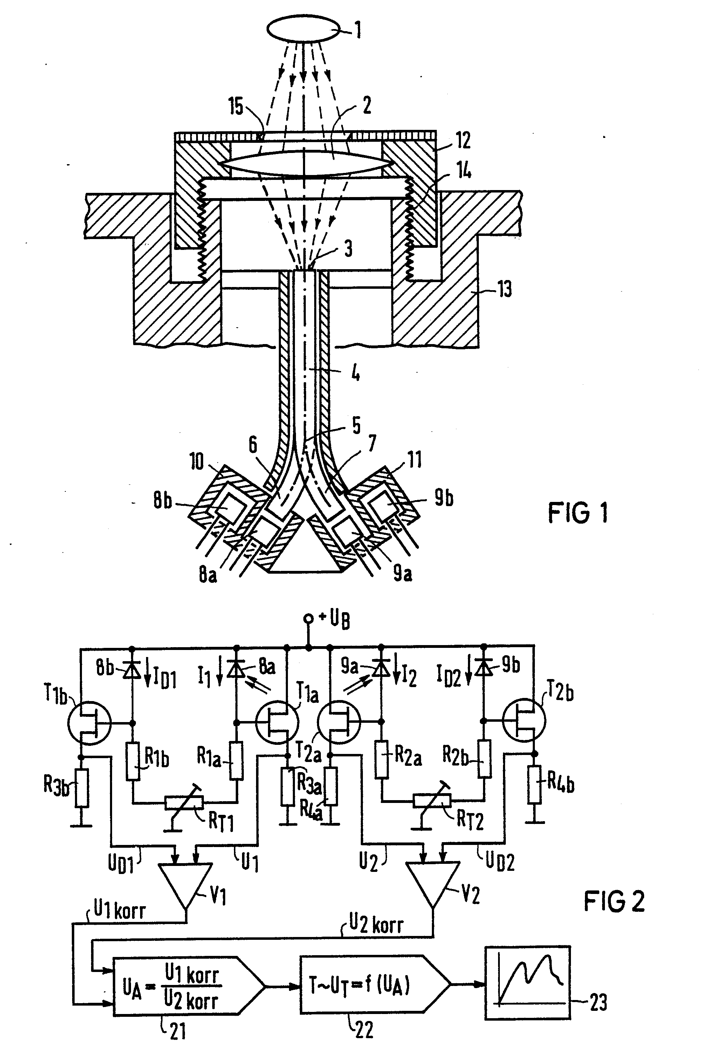

Figur 1 zeigt einen thermischen Strahler 1, dessen Strahlung von einer Fokussieroptik 2 in das offene Ende 3 eines Lichtleiters 4 fokussiert wird. Der Lichtleiter weist eine Verzweigung 5 in zwei Zweige 6, 7 auf, vor deren Enden jeweils ein fotoelektrisches Element 8a bzw. 9a angeordnet ist. Neben jedem Meßelement 8a, 9a befindet sich ein zugehöriges gleichartiges Referenzelement 8b, bzw. 9b in engem Wärmekontakt. Der Wärmekontakt wird durch ein gemeinsames gut leitendes Gehäuse um jeweils ein Meßelement 8a bzw. 9a und ein Referenzelement 8b bzw. 9b hergestellt. Gleichzeitig schirmt das Gehäuse 10 bzw. 11 das Referenzelement 8b bzw. 9b von jeder einfallenden Strahlung ab. Die Fokussieroptik ist in einer Halterung 12 befestigt, welche gegenüber dem Gehäuse 13 des übrigen Gerätes verstellbar ist, beispielsweise durch ein Feingewinde 14. Dadurch können die Fokussierungsbedingungen für verschiedene Entfernungen des Objektes eingestellt werden. Eine Blende 15 vor der Fokussieroptik 2 bewirkt eine definierte Öffnung.

In Figur 2 ist ein Blockdiagramm der elektronischen Signalverarbeitung in stark vereinfachter Form dargestellt, wobei als fotoelektrische Elemente Fotodioden mit unterschiedlichen spektralen Empfindlichkeiten eingesetzt werden. Die strahlungsinduzierten Fotoströme $I_1$, $I_2$ der Dioden 8a, 9a bewirken an den Lastwiderständen $R_{1a}$, $R_{2a}$ Spannungsabfälle, welche über die Impedanzwandler $T_{1a}$, $T_{2a}$ (Feldeffekttransistor-Sourcefolger) nieder-

ohmig ausgekoppelt werden. Die Referenzdioden 8b, 9b in Verbindung mit den Impedanzwandlern $T_{1b}$, $T_{2b}$ dienen zur Kompensation der Dunkelströme $I_{D1}$, $I_{D2}$. Da die Dioden 8a, 8b bzw. 9a, 9b jeweils gleichartig sind, sind auch ihre Dunkelströme $I_{D1}$ bzw. $I_{D2}$ gleich, so daß eine genaue Kompensation möglich ist, sofern sich die Paare jeweils auf gleicher Temperatur befinden und die Referenzdioden nicht der Strahlung ausgesetzt sind. Kleine Unsymmetrien, die sich auch bei gleichartigen Dioden ergeben können, werden durch die Trimmer $R_{T1}$, $R_{T2}$ ausgeglichen. Die an Widerständen $R_{3a}$, $R_{3b}$ bzw. $R_{4a}$, $R_{4b}$ abfallenden Spannungen $U_1$, $U_{D1}$ bzw. $U_2$, $U_{D2}$ entsprechenden den strahlungsinduzierten Strömen $I_1$ bzw. $I_2$ und den Dunkelströmen $I_{D1}$ bzw. $I_{D2}$. Zwei Differenzverstärker $V_1$, $V_2$ bilden anschließend die Differenzen $U_{1korr}$ bzw. $U_{2korr}$ aus den strahlungsinduzierten Spannungen $U_1$, $U_2$ und den jeweils zugehörigen, den Dunkelströmen entsprechenden Spannungen $U_{D1}$, $U_{D2}$. Das Ergebnis sind die auf Temperatureinflüsse korrigierten Spannungen $U_{1korr}$ und $U_{2korr}$, welche wie ansonsten von Verhältnispyrometern bekannt weiterverarbeitet werden. Der Verstärkungsfaktor der Differenzverstärker spielt dabei prinzipiell keine Rolle, jedoch muß die Verstärkung sehr konstant bleiben.

Die Weiterverarbeitung der Signale erfolgt, wie von Verhältnispyrometern an sich bekannt, in drei prinzipiellen Schritten 21, 22, 23, nämlich zunächst Verhältnisbildung der Meßsignale, Ermitteln der Temperatur anhand einer Eichkurve aus dem Verhältnis, wobei die Eichkurve vorzugsweise experimentell bestimmt wird, jedoch prinzipiell auch aus dem Planckschen Strahlungsgesetz und dem Wienschen Verschiebungsgesetz unter Berücksichtigung der Empfindlichkeitskurven der Fotodioden hergeleitet werden kann. Schließlich wird die Temperatur angezeigt, in Abhängigkeit von der Zeit dargestellt, gespeichert oder anderweitig übermittelt. Die beschriebene Auswerteelektronik kann unter Einsatz von integrierten Schaltkreisen und gegebenenfalls Mikroprozessoren sehr platz- und gewichtssparend hergestellt werden, so daß das gesamte Gerät kompakt und gut handhabbar wird.

**Ansprüche**

1. Fotoelektrisches Pyrometer zur Messung der Temperatur eines Objektes (1), wobei das Pyrometer eine Fokussieroptik (2), einen Strahlungsteiler (5) und zwei fotoelektrische Elemente (8a, 9a) zur quantitativen Erfassung der von dem Objekt (1) ausgehenden Strahlung aufweist,

**dadurch gekennzeichnet,**

daß die fotoelektrischen Elemente (8a, 9a) unterschiedliche spektrale Empfindlichkeiten aufweisen, z. B. mit Maxima der Empfindlichkeiten bei 0,8 bzw. 1,6 µm Wellenlänge.

2. Pyrometer, insbesondere nach Anspruch 1,

**dadurch gekennzeichnet,**

daß die fotoelektrischen Elemente (8a, 9a) eine sehr geringe Eigenkapazität, z. B. kleiner 5 pF aufweist, was zu kurzen Ansprechzeiten, z. B. kleiner 1 ns führt.

3. Pyrometer nach Anspruch 2,

**dadurch gekennzeichnet,**

daß die fotoelektrischen Elemente (8a, 9a) Foto-PIN-Dioden oder Foto-Avalanche-Dioden sind.

4. Pyrometer , insbesondere nach Anspruch 1,2 oder 3,

**dadurch gekennzeichnet,**

daß jedem fotoelektrischen Element (8a, 9a)zur Erfassung der Strahlung ein gleichartiges Referenzelement (8b, 9b) außerhalb der strahlung zugeordnet ist, welches zur Temperaturkompensation dient.

5. Pyrometer nach Anspruch 4,

**dadurch gekennzeichnet,**

daß die Referenzelemente (8b, 9b) mit den zugehörigen fotoelektrischen Elementen (8a, 9a) in engem Wärmekontakt stehen, vorzugsweise jeweils in einem gemeinsamen wärmeleitenden Gehäuse (10 bzw. 11) angeordnet sind.

6. Pyrometer nach einem der vorhergehenden Ansprüche,

**dadurch gekennzeichnet,**

daß die Fokussieroptik (2) so angeordnet ist, daß die von dem Objekt (1) ausgehende Strahlung in das offene Ende (3) eines Lichtleiters (4) fokussiert wird.

7. Pyrometer nach Anspruch 6,

**dadurch gekennzeichnet,**

daß der Lichtleiter (4) nach einer zur statistischen Verteilung der einfallenden Strahlung ausreichenden Länge/Durchmesser in zwei Zweige (6, 7) aufgespalten ist, vor denen die fotoelektrischen Elemente (8a, 9a) zur Erfassung der Strahlung angeordnet sind.

8. Pyrometer nach Anspruch 6 oder 7,

**dadurch gekennzeichnet,**

daß die Fokussieroptik (2) und der Lichtleiter (4) aus einem im gewünschten Wellenlängenbereich gut durchlässigen Material bestehen, beispielsweise für Messung von Temperaturen bis etwa 2500 °C aus infrarotdurchlässigem Material, insbesondere Bleisilikatglas, Ca-Al-Silikatglas oder Fluor-Phosphatglas.

9. Pyrometer nach einem der vorhergehenden Ansprüche,

**dadurch gekennzeichnet,**

daß die spektralen Empfindlichkeiten der fotoelektrischen Elemente (8a, 8b, 9a, 9b) in Abhängigkeit von gewünschten Temperaturmeßbereich so gewählt sind, daß sich das Verhältnis der Ströme ($I_1$, $I_2$) in den beiden fotoelektrischen Elementen (8a, 9a) im Temperaturmeßbereich bei Temperaturänderungen möglichst gut meßbar ändert.

10. Pyrometer nach Anspruch 4, 5, 6, 7, 8 oder 9,

**dadurch gekennzeichnet,**

daß die fotoelektrischen Elemente (8a, 8b, 9a, 9b) mit einer Auswerteelektronik verbunden sind, die jeweils die Differenz aus den Strömen im fotoelektrischen Element (8a bzw. 9a) und zugehörigem Referenzelement (8b bzw. 9b) bildet und die beiden Differenzen in an sich bei Verhältnispyrometern bekannter Weise weiterverarbeitet und in eine Temperatur umrechnet, die angezeigt, aufgezeichnet oder übermittelt wird.

11. Pyrometer nach Anspruch 10,

**dadurch gekennzeichnet,** daß die Auswerteelektronik aus Hochgeschwindigkeits-Schaltkreisen aufgebaut ist, vorzugsweise mit Signalanstiegen größer 10 V/µs (slew-rate).

FIG 1

FIG 2